# FASCICULE DE BREVET EUROPEEN

(11) **EP 1 170 586 B1**
(45) Date de publication et mention de la délivrance du brevet: **04.04.2007**
(21) Numéro de dépôt: 01401789.1
(22) Date de dépôt: 04.07.2001
(51) Int. Cl.: G01N 27/416

(54) **Capteur de mesure de la pression partielle d'un gaz du type comportant une cellule électrochimique et une barrière de diffusion gazeuse**
Sensor zur Partialdruckmessung eines Gases mit einer elektrochemischen Zelle und Diffusionsbarriere
Sensor for measuring the parial pressure of a gas of the type with an electrochemical cell and diffusion barrier

(30) Priorité: 04.07.2000 FR 0008695
(43) Date de publication de la demande: 09.01.2002
(73) Titulaire: Oldham, 62027 Arras Cedex (FR)
(72) Inventeur: Taylor, Malcolm, 62217 Beaurains (FR); Witrant, Lionel Félix, 59650 Villeneuve d'Ascq (FR); Beaumont, Jean-Marie, 59169 Goeulzin (FR); Chavalier, Daniel Lucien Gaston, 62217 Beaurains (FR)
(74) Mandataire: Neyret, Daniel Jean Marie

(56) Documents cités:
- WO-A-99/24826
- US-A- 4 495 051
- US-A- 4 689 135

## Description

L'invention concerne la mesure de la pression partielle d'un gaz donné dans un milieu gazeux, par exemple la mesure de la pression partielle d'oxygène dans l'air.

Plus précisément, elle concerne les capteurs de mesure de cette pression partielle utilisant une cellule électrochimique. Cette cellule est constituée par une cathode en métal noble (tel que du platine), une anode en plomb, et un électrolyte (tel que de la soude). Il est classique de réaliser l'anode sous une forme poreuse (en laine de plomb par exemple) et de l'imprégner d'électrolyte. La cathode et l'anode sont empilées dans un boîtier en étant séparées par une membrane isolante perméable à l'électrolyte. Des moyens d'amenée et d'extraction du gaz à analyser sont associés à cette cellule. Ces capteurs comprennent également une barrière de diffusion qui limite le flux gazeux pénétrant dans la cellule, de manière à conférer une meilleure sensibilité au capteur. Il est préférable, en général, que la cellule détecte la pression partielle d'oxygène dans l'air à analyser et non sa concentration (car la pression partielle d'oxygène est plus représentative des éventuels risques encourus par les personnes respirant cette atmosphère, en particulier dans les locaux en dépression). Certains capteurs utilisent comme barrière de diffusion des membranes non poreuses, comme décrit par exemple dans le document US-A-4,495,051. Il est nécessaire d'utiliser à cet effet des membranes de très faible épaisseur. Surtout, ces membranes sont très sensibles aux variations de température, ce qui limite la précision et la fiabilité des capteurs ainsi constitués.

Dans un autre type le capteur connu la barrière de diffusion procure un mode de diffusion de type Knudsen. Ce mode de diffusion est obtenu en utilisant comme élément principal de la barrière de diffusion une membrane en un matériau poreux ayant des pores suffisamment petits pour que le nombre de collisions entre les molécules de gaz et les parois des pores soit beaucoup plus grand que le nombre de collisions intermoléculaires. En première approximation, on peut dire que les pores doivent être d'un diamètre très inférieur au libre parcours moyen des molécules, qui est de l'ordre de 9,5.10⁻⁸ m à pression et température ambiantes.

La membrane doit, en outre, posséder une faible dilatation thermique entre -10 et 40°C (les températures d'utilisation habituelles de ces cellules), une grande stabilité mécanique sur plusieurs années, et une insensibilité au taux d'humidité du milieu analysé.

De telles membranes peuvent être, de manière connue, réalisées à partir de bandes de PTFE spécialement préparées, tel que décrit, par exemple dans le document GB-A-2.049.952 qui concerne des capteurs de mesure de la pression partielle d'oxygène du type précédent. Les différents éléments de la cellule électrochimique sont contenus dans un boîtier, obturé à son extrémité supérieure par un couvercle métallique. Ce couvercle métallique comporte une perforation centrale de petit diamètre (de l'ordre par exemple de 0,12 mm). Dans un mode de réalisation préféré, la barrière de diffusion est constituée par une bande de PTFE, placée au-dessus de cette perforation et enserrée entre deux bandes de ruban adhésif qui augmentent le chemin de diffusion de l'atmosphère à analyser. L'ensemble est comprimé par un chapeau métallique scellé sur le couvercle (par exemple par soudage), percé de petits trous autorisant l'accès du gaz à la périphérie de la barrière de diffusion. On obtient ainsi une sensibilité convenable du capteur en limitant le flux d'oxygène qui le parcourt et en l'obligeant à traverser la plus grande partie possible de la bande de PTFE constituant la barrière de diffusion.

Cette construction du capteur présente cependant l'inconvénient suivant. Le chapeau métallique doit être mis en place de force, par martelage, de manière à comprimer la bande de PTFE pour lui faire remplir tout l'espace traversé par le gaz à analyser. Le martelage a pour conséquence une application localisée d'efforts importants qui peuvent conduire à des détériorations de la bande et à une dégradation accrue de ses propriétés mécaniques au fil du temps. Dans ces conditions, les pores de la barrière de diffusion sont endommagés et le capteur devient rapidement peu fiable.

Le but de l'invention est de proposer une configuration de la partie supérieure d'un capteur de mesure de la pression partielle d'un gaz du type précédemment décrit procurant au capteur une fiabilité et une durabilité accrues.

A cet effet, l'invention a pour objet un capteur de mesure de la pression partielle d'un gaz dans un milieu gazeux, du type comportant une cellule électrochimique et une barrière de diffusion poreuse située en amont de ladite cellule sur le parcours dudit milieu gazeux, ladite barrière de diffusion comportant une membrane poreuse à pores très fins située au-dessus d'un orifice pratiqué dans une pièce coiffant un boîtier renfermant ladite cellule électrochimique, caractérisé en ce qu'il comporte :
- une capsule coiffant ledit boîtier de manière étanche, ladite capsule incluant ou étant constituée par une première pièce pourvue d'un évidement central au fond duquel est pratiqué ledit orifice, un logement étant prévu dans le fond dudit évidement autour dudit orifice pour y placer ladite membrane poreuse ;
- une deuxième pièce appliquant ladite membrane contre le fond dudit logement avec un jeu entre ladite deuxième pièce et la paroi latérale du logement autorisant le passage du milieu gazeux à analyser en direction de ladite membrane ; et
- une troisième pièce maintenue dans ledit évidement central de ladite première pièce de manière à exercer sur ladite deuxième pièce la pression nécessaire à l'application de ladite membrane contre le fond dudit évidement, et comportant au moins un orifice autorisant le passage dudit milieu gazeux depuis l'extérieur du capteur jusqu'à ladite membrane.

Lesdites première, deuxième et troisième pièces sont de préférence en un matériau métallique insensible à la corrosion et présentant une faible dilatation entre -10 et 40°C, tel que l'acier inoxydable SUS 316 L.

Dans une forme de réalisation, ladite capsule comporte une enveloppe en polymère enrobant latéralement ladite première pièce métallique, et ladite enveloppe assure le contact étanche entre la capsule et le boîtier renfermant la cellule électrochimique.

Préférentiellement, l'évidement central de la première pièce comporte un filetage sur sa paroi latérale, et la troisième pièce comporte sur sa paroi externe un filetage correspondant au précédent, de manière à assurer la solidarisation des première et troisième pièces et le maintien de la troisième pièce dans une position où elle peut assurer l'application de la deuxième pièce contre la membrane poreuse.

Comme on l'aura compris, l'invention consiste en premier lieu à réaliser l'obturation de la partie amont du boîtier renfermant la cellule électrochimique (c'est à dire de la partie par laquelle le gaz à analyser pénètre dans le capteur) par une capsule comportant une première pièce évidée. Le fond de cet évidement comporte un logement dans le fond duquel est pratiqué l'orifice par lequel le gaz à analyser pénètre dans la cellule électrochimique. Une pastille en un matériau poreux apte à constituer une barrière de diffusion de type Knudsen est disposée dans le fond de ce logement. L'évidement est comblé à sa partie supérieure par une autre pièce perforée qui exerce une pression sur une pièce intermédiaire ; celle-ci est elle-même placée dans le logement renfermant la pastille poreuse avec un très léger jeu autorisant le passage du gaz à analyser.

La pression exercée sur la pièce intermédiaire est transmise par celle-ci à la pastille poreuse, de telle sorte que celle-ci occupe de préférence tout le fond de son logement. Ainsi, le gaz à analyser traverse la pastille poreuse en suivant le chemin le plus long possible, ce qui optimise les performances du capteur en termes de sensibilité. De plus, les efforts de compression appliqués sur la pastille poreuse sont également répartis sur l'ensemble de sa surface, aussi bien pendant le montage du capteur que pendant son utilisation. On ne crée donc pas sur la pastille de zones qui, à un moment ou à un autre, seraient soumises à un effort excessif qui pourrait la détériorer.

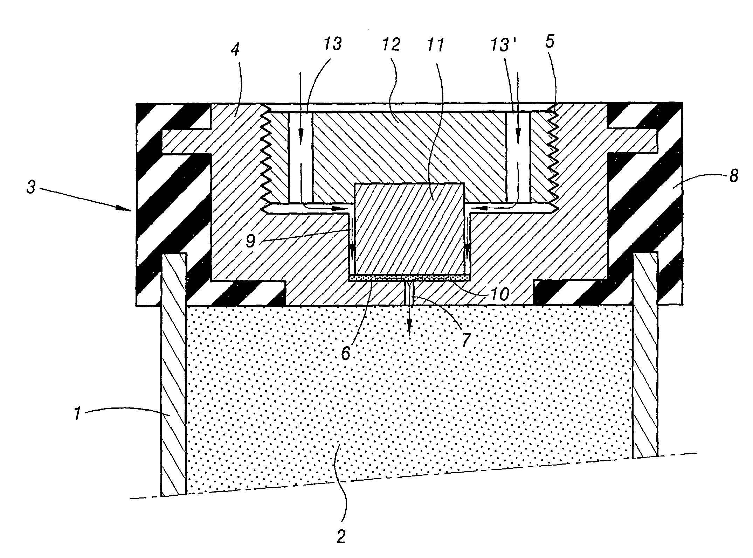

L'invention sera mieux comprise à la lecture de la description qui suit, donnée en référence à la figure unique annexée qui montre, vue en coupe longitudinale, la partie supérieure d'un exemple de capteur de mesure de la pression partielle d'un gaz selon l'invention.

Le capteur de mesure de la pression partielle d'un gaz dans un milieu gazeux selon l'invention représenté sur la figure unique comporte, de manière connue, un boîtier 1 de forme générale, par exemple, cylindrique. Il renferme la cellule électrochimique 2 qui comporte une anode, une cathode et un électrolyte. Cette cellule électrochimique 2 peut être de tout type connu en lui-même, et elle ne sera donc pas décrite et représentée en détail.

Selon l'invention, le boîtier 1 est obturé à sa partie supérieure par une capsule 3. Cette capsule se compose tout d'abord d'une première pièce métallique 4, pourvue d'un évidement central 5, dans le fond 6 duquel est pratiqué un orifice 7 de faibles dimensions (par exemple 0,3 mm de diamètre et 0,75 mm de profondeur), débouchant à la partie supérieure de la cellule électrolytique 2. Cette première pièce métallique 4 est enrobée latéralement par une enveloppe en polymère 8. C'est cette enveloppe 8 qui assure la jonction étanche entre la capsule 3 et la partie supérieure du boîtier 1. Cette étanchéité est obtenue, par exemple, au moyen d'un soudage par ultrasons de l'enveloppe 8 sur le boîtier 1.

Un logement 9 est prévu dans le fond 6 de l'évidement 5, et c'est sensiblement au centre du fond de ce logement 9 qu'est pratiqué l'orifice 7. Au fond de ce logement 9 est placée une pastille 10 d'un matériau apte à constituer une barrière de diffusion de type Knudsen pour le gaz dont la pression partielle dans le milieu gazeux où est plongé le capteur doit être mesurée, par exemple pour l'oxygène.

Ce logement 9 est également apte à recevoir une deuxième pièce métallique 11, dont le diamètre extérieur n'est que de très peu inférieur au diamètre du logement 9, de manière à ne laisser entre elle et la paroi latérale du logement 9 qu'un jeu minimal (de 0.05 mm par exemple) autorisant le passage du milieu gazeux à analyser.

La capsule 3 comporte également une troisième pièce métallique 12, destinée à être insérée à l'intérieur de l'évidement 5, et à exercer une pression sur la deuxième pièce métallique 11. Cette pression est transmise à la membrane poreuse 10, de manière à assurer, de préférence, le complet remplissage du fond du logement 9 par ladite membrane. Dans l'exemple représenté sur la figure unique, la paroi latérale de l'évidement 5 comporte un filetage, et la troisième pièce métallique 12 comporte sur sa paroi latérale un filetage correspondant, permettant le vissage de la troisième pièce métallique 12 à l'intérieur de l'évidement 5. Ce vissage est réalisé lors du montage du capteur, de manière à obtenir un blocage de la troisième pièce métallique 12 à l'intérieur de l'évidement 5 lorsque la membrane poreuse 10 est comprimée de façon adéquate. Au moins un orifice 13, 13' perce verticalement la troisième pièce métallique 12, de manière à amener le milieu gazeux extrait du milieu à analyser dans l'espace étroit séparant le logement 9 et la deuxième pièce métallique 11. Il est ainsi possible au milieu gazeux à analyser de parvenir jusqu'à la membrane poreuse 10, de la traverser, puis de pénétrer dans l'orifice 7 et enfin dans la cellule électrochimique 2 pour y être analysé de la manière connue.

Il est indispensable que les deuxième 11 et troisième 12 pièces métalliques soient distinctes l'une de l'autre. En effet, lors du montage du capteur, il ne faut pas que la membrane poreuse 10 subisse un effort de cisaillement appliqué sur sa surface supérieure, ce qui serait le cas si la pièce métallique en contact avec elle subissait une rotation lors de l'opération de vissage. Pour cette même raison, il est indispensable que le contact entre les deuxième 11 et troisième 12 pièces métalliques s'effectue avec des frottements très réduits, car sinon le mouvement de rotation de la troisième pièce métallique 12 lors de son vissage pourrait être au moins partiellement transmis à la deuxième pièce métallique 11, ce qui conduirait à la détérioration de la membrane poreuse 10 ou à sa déformation. Dans la pratique, on réalise les deuxième 11 et troisième 12 pièces métalliques avec des surfaces de contact présentant une rugosité Ra meilleure que 0,8.

Les diverses pièces métalliques 4, 11, 12 dont on vient de parler doivent être réalisées en un matériau insensible à la corrosion, puisque ces capteurs doivent pouvoir être utilisés dans des environnements pollués ou humides. Un acier inoxydable de type SUS 316L est un matériau particulièrement indiqué pour réaliser ces différentes pièces, car outre son insensibilité à la corrosion, il présente les faibles caractéristiques de dilatation thermique exigées entre -10 et 40°C.

En variante, il serait possible de réaliser tout ou partie des différentes pièces métalliques 4, 11, 12 qui viennent d'être décrites en une matière plastique, à condition que celle-ci permette d'obtenir une précision d'usinage suffisante, en particulier pour les filetages dont on a parlé, et les faibles frottements requis entre les deuxième et troisième pièces 11, 12.

Inversement, on pourrait se passer de l'enveloppe en polymère 8 de la première pièce métallique 4, et visser ou souder celle-ci directement sur la partie supérieure du boîtier 1, à condition d'obtenir une étanchéité suffisante au niveau de cette liaison.

En variante, la troisième pièce 12 peut être maintenue en place de manière à exercer une pression sur la deuxième pièce 11 non pas grâce à un filetage, mais grâce à un autre type de dispositif, par exemple au moyen d'un clip.

On aura noté que le capteur selon l'invention ne nécessite pas la présence de ruban adhésif qui viendrait s'ajouter à la membrane poreuse 10 et que le gaz à analyser serait obligé de traverser avant de parvenir à la cellule électrochimique 2.

Préférentiellement, la partie supérieure de la capsule 3 est coiffée par un couvercle en matériau poreux non représenté sur la figure unique, de manière à éviter que de l'eau ou des poussières ne s'introduisent dans les orifices 13, 13' d'entrée du gaz à analyser.

L'invention trouve une application privilégiée dans le domaine de l'analyse de l'air ambiant par mesure de la pression partielle d'oxygène. Il va de soi qu'elle pourrait être utilisée sur des capteurs fonctionnant selon le même principe et permettant l'analyse d'autres types d'atmosphère que l'air, par mesure de la pression partielle d'un gaz déterminé.

## Revendications

1. Capteur de mesure de la pression partielle d'un gaz dans un milieu gazeux, du type comportant une cellule électrochimique (2) et une barrière de diffusion poreuse située en amont de ladite cellule sur le parcours dudit milieu gazeux, ladite barrière de diffusion comportant une membrane poreuse (10) à pores très fins située au-dessus d'un orifice (7) pratiqué dans une pièce coiffant un boîtier (1) renfermant ladite cellule électrochimique (2), **caractérisé en ce qu'**il comporte :
- une capsule (3) coiffant ledit boîtier (1) de manière étanche, ladite capsule (3) incluant ou étant constituée par une première pièce (4) pourvue d'un évidement central (5) au fond duquel est pratiqué ledit orifice (7), un logement (9) étant prévu dans le fond (6) dudit évidement autour dudit orifice (7) pour y placer ladite membrane poreuse (10);
- une deuxième pièce (11) appliquant ladite membrane (10) contre le fond (6) dudit logement (9) avec un jeu entre ladite deuxième pièce (11) et la paroi latérale du logement (9) autorisant le passage du milieu gazeux à analyser en direction de ladite membrane (10); et
- une troisième pièce (12) maintenue dans ledit évidement central (5) de ladite première pièce (4) de manière à exercer sur ladite deuxième pièce (11) la pression nécessaire à l'application de ladite membrane (10) contre le fond (6) dudit évidement (9), et comportant au moins un orifice (13, 13') autorisant le passage dudit milieu gazeux depuis l'extérieur du capteur jusqu'à ladite membrane (10).

2. Capteur selon la revendication 1, **caractérisé en ce que** lesdites première (4), deuxième (11) et troisième (12) pièces sont en un matériau métallique insensible à la corrosion et présentant une faible dilatation entre -10 et 40°C, tel que l'acier inoxydable SUS 316L.

3. Capteur selon la revendication 1 ou 2, **caractérisé en ce que** ladite capsule (3) comporte une enveloppe en polymère enrobant latéralement ladite première pièce métallique, et **en ce que** ladite enveloppe (8) assure le contact étanche entre la capsule (3) et le boîtier (1) renfermant la cellule électrochimique (2).

4. Capteur selon l'une des revendications 1 à 3, **caractérisé en ce que** l'évidement central (5) de la première pièce comporte un filetage sur sa paroi latérale, et **en ce que** la troisième pièce (12) comporte sur sa paroi externe un filetage correspondant au précédent, de manière à assurer la solidarisation des première (4) et troisième (12) pièces et le maintien de la troisième pièce (12) dans une position où elle peut assurer l'application de la deuxième pièce (11) contre la membrane poreuse (10).

## Claims

1. Sensor for measuring the partial pressure of a gas in a gaseous medium, of the type comprising an electrochemical cell (2) and a porous diffusion barrier located downstream of said cell in the path of said gaseous medium, said diffusion barrier comprising a porous membrane (10) having very fine pores that is located above an orifice (7) formed in a component surmounting a casing (1) containing said electrochemical cell (2), **characterised in that** it comprises:
- a capsule (3) surmounting said casing (1) in a gas-tight manner, said capsule (3) including or being constituted by a first component (4) provided with a central recess (5) in the bottom of which said orifice (7) is formed, a housing (9) being provided in the bottom (6) of said recess around said orifice (7) for the positioning of said porous membrane (10) therein;
- a second component (11) that presses said membrane (10) against the bottom (6) of said housing (9) with a clearance between said second component (11) and the lateral wall of the housing (9) permitting the passage of the gaseous medium to be analysed in the direction towards said membrane (10); and
- a third component (12) which is held in said central recess (5) of said first component (4) in such a manner that it exerts on said second component (11) the necessary pressure to press said membrane (10) against the bottom (6) of said recess (9), and which comprises at least one orifice (13, 13') permitting the passage of said gaseous medium from outside the sensor to said membrane (10).

2. Sensor according to claim 1, **characterised in that** said first (4), second (11) and third (12) components are made of a metal material that is not susceptible to corrosion and that has low expansion between -10 and 40°C, such as stainless steel SUS 316L.

3. Sensor according to claim 1 or 2, **characterised in that** said capsule (3) has a case made of polymer that surrounds said first metal component laterally, and **in that** said case (8) ensures gas-tight contact between the capsule (3) and the casing (1) containing the electrochemical cell (2).

4. Sensor according to any one of claims 1 to 3, **characterised in that** the central recess (5) in the first component has a thread on its lateral wall, and **in that** the third component (12) has on its outside wall a thread corresponding to the preceding thread, in such a manner as to secure the first (4) and third (12) components together and hold the third component (12) in a position in which it is able to press the second component (11) against the porous membrane (10).

## Patentansprüche

1. Sensor zum Messen des Partialdrucks eines Gases in einem gasförmigen Medium, des Typs, der eine elektrochemische Zelle (2) und eine poröse Diffusionssperre, die sich stromaufseitig von der Zelle in dem Weg des gasförmigen Mediums befindet, umfasst, wobei die Diffusionssperre eine poröse Membran (10) mit sehr feinen Poren aufweist, die sich über einer Öffnung (7) befindet, die in einem Teil ausgebildet ist, das einen Behälter (1) abdeckt, der die elektrochemische Zelle (2) umschließt, **dadurch gekennzeichnet, dass** er umfasst:
- eine Kapsel (3), die den Behälter (1) dicht abdeckt, wobei die Kapsel (3) ein erstes Teil (4) enthält oder hierdurch gebildet ist, das mit einer mittigen Aussparung (5) versehen ist, in deren Boden die Öffnung (7) ausgebildet ist, wobei in dem Boden (6) der Aussparung um die Öffnung (7) ein Aufnahmesitz (9) vorgesehen ist, um darin die poröse Membran (10) anzuordnen;
- ein zweites Teil (11), das die Membran (10) gegen den Boden (6) des Aufnahmesitzes (9) mit einem Spiel zwischen dem zweiten Teil (11) und der Seitenwand des Aufnahmesitzes (9), das den Durchgang des zu analysierenden gasförmigen Mediums in Richtung der Membran (10) zulässt, drückt; und
- ein drittes Teil (12), das in der mittigen Aussparung (5) des ersten Teils (4) so gehalten wird, dass es auf das zweite Teil (11) den zum Drücken der Membran (10) gegen den Boden (6) der Aussparung (9) notwendigen Druck ausübt, und wenigstens eine Öffnung (13, 13') aufweist, die den Durchgang des gasförmigen Mediums von der äußeren Umgebung des Sensors bis zu der Membran (10) zulässt.

2. Sensor nach Anspruch 1, **dadurch gekennzeichnet, dass** das erste Teil (4), das zweite Teil (11) und das dritte Teil (12) aus einem korrosionsunempfindlichen metallischen Material, das zwischen -10 und 40 °C eine geringe Dehnung aufweist, etwa rostfreier Stahl SUS 316L, bestehen.

3. Sensor nach Anspruch 1 oder 2, **dadurch gekennzeichnet, dass** die Kapsel (3) eine Polymerhülle aufweist, die das erste metallische Teil seitlich umgibt, und dass die Hülle (8) den dichten Kontakt zwischen der Kapsel (3) und dem die elektrochemische Zelle (2) umschließenden Behälter (1) sicherstellt.

4. Sensor nach einem der Ansprüche 1 bis 3, **dadurch gekennzeichnet, dass** die mittige Aussparung (5) des ersten Teils an ihrer Seitenwand ein Gewinde aufweist und dass das dritte Teil (12) an seiner Außenwand ein dem vorhergehenden entsprechendes Gewinde aufweist, derart, dass die Befestigung des ersten Teils (4) und des dritten Teils (12) und das Halten des dritten Teils (12) in einer Position, in der dieses das Drücken des zweiten Teils (11) gegen die poröse Membran (10) sicherstellt, gewährleistet ist.
